(19) Europäisches Patentamt
European Patent Office
Office européen des brevets

(11) **EP 3 276 522 B1**

(12) **EUROPEAN PATENT SPECIFICATION**

(45) Date of publication and mention
of the grant of the patent:
**15.04.2020 Bulletin 2020/16**

(51) Int Cl.:
***G06F 21/56*** *(2013.01)* ***G06F 21/62*** *(2013.01)*
***G06F 21/60*** *(2013.01)*

(21) Application number: **17154001.6**

(22) Date of filing: **31.01.2017**

(54) **SYSTEM AND METHOD OF BLOCKING ACCESS TO PROTECTED APPLICATIONS**

SYSTEM UND VERFAHREN ZUM BLOCKIEREN DES ZUGANGS ZU GESCHÜTZTEN ANWENDUNGEN

SYSTÈME ET PROCÉDÉ DE BLOCAGE D'ACCÈS À DES APPLICATIONS PROTÉGÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2016 RU 2016131361**
**05.12.2016 US 201615368898**

(43) Date of publication of application:
**31.01.2018 Bulletin 2018/05**

(73) Proprietor: **AO Kaspersky Lab**
**Moscow 125212 (RU)**

(72) Inventors:
• **KALININ, Alexander V.**
**Moscow 125212 (RU)**
• **POLOZOV, Pavel L.**
**Moscow 125212 (RU)**

• **LEVCHENKO, Vyacheslav I.**
**Moscow 125212 (RU)**
• **YUDIN, Maxim V.**
**Moscow 125212 (RU)**

(74) Representative: **Chimini, Francesco**
**Jacobacci & Partners S.p.A.**
**Piazza della Vittoria 11**
**25122 Brescia (IT)**

(56) References cited:
**US-A1- 2013 346 492 US-B1- 7 818 800**

• **Anonymous: "nProtect.com", , 30 June 2014 (2014-06-30), XP055374248, Retrieved from the Internet: URL:https://web.archive.org/web/2014063002 2129/http://nos.nprotect.com:80/product/no s.html [retrieved on 2017-05-18]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Field of Technology

The present disclosure relates generally to the field of computer security, and, specifically, to systems and methods of blocking access to protected applications.

## Background

At present, the number of various applications (software) used on computing devices, including personal electronic computing machines (computers), is constantly increasing. Among the multitude of applications, there are many malicious programs which are able to cause harm to a computer or the user of a computer (particularly the data of the user), such as Internet worms, keyboard trackers, computer viruses, as well as applications which can take screenshots for the purpose of stealing confidential information being displayed on the user's computing device.

The protection of the confidential data of a user of computing devices against such programs is an urgent problem. Such data may be displayed to the user using windows of various applications, such as browsers. Malicious applications can obtain access to the information being displayed on the screen of the computing device and take screenshots (snapshots of the screen) or obtain access to the bit representation of the image on the screen of the computing device (the data characterizing the image, by accessing the system functions of the operating system or the corresponding drivers forming the image, consisting of application windows and being displayed on the screen of the computing device).

Methods exist, often realized in antivirus applications, whereby the antivirus application intercepts the access of processes to the data characterizing the image on the screen of the computing device. If, among the windows of the applications running, there are those which belong to protected applications (e.g., applications running in the "sandbox"), access to the data characterizing the image on the screen of the computing device may be blocked.

Examples of such known methods are disclosed in US 7 818 800 B1 and US 2013/346492 A1.

The known methods do not solve the problem of blocking access to information being displayed to the user. The present disclosure may enable a more effective solution of the problem of blocking access to information.

## Summary

Disclosed are systems and methods for blocking access to protected applications. An exemplary method includes: intercepting access by a process of first information to be displayed on the user's computing device; determining second information based on the interception of the access by the process, the second information associated with the process; determining a region on a display of the user's device associated with the first information; analyzing one or more intersections between the region and at least one graphic interface associated with the process; and blocking the access by the process to the first information based on the analysis of the one or more intersections between the region and the at least one graphic interface associated with the process.

In one example, the determination of the region comprises at least one of: determining a location on the display corresponding to the region; determining a device context that corresponds to the region; determining a surface corresponding to the region; and determining a window identifier corresponding to the region.

In one example, the second information includes at least one of a process identifier and a thread identifier.

In one example, the analysis of the one or more intersections between the region and the at least one graphic interface associated with the process comprises: determining whether the at least one graphic interface associated with the process contains, is contained, or at least partially intersects the region on the display.

In one example, the analysis of the one or more intersections between the region and the at least one graphic interface associated with the process comprises: calculating an importance rating of the region based on the determination of whether the graphic interface associated with the process contains, is contained, or at least partially intersects the region on the display; and calculating a danger rating based on the information about the process.

In one example, the determination of whether to block the access by the process to the first information based on the analysis of the one or more intersections between the region and the at least one graphic interface associated with the process comprises: combining the importance rating and the danger rating; and comparing the combination of the importance rating and the danger rating to a predetermined threshold.

In one example, the calculation of the importance rating of the region based on the determination of whether the graphic interface associated with the process contains, is contained, or at least partially intersects the region on the display comprises: accessing, from an information database, one or more coefficients of confidentiality associated with one or more elements that at least partially intersect the region; and calculating the importance rating based on an algorithm that takes into account the one or more coefficients of confidentiality.

In one example, the method further comprises: calculating the one or more coefficients of confidentiality; and storing the calculated one or more coefficients of confidentiality in the information database.

In one example, the blocking of the access by the process to the first information comprises: substituting, in a memory of the user's device, a binary representation of the information being displayed to the user.

In one example, the method further comprises: determining whether an application associated with the process is malicious based on the analysis of the one or more intersections between the region and the at least one graphic interface associated with the process.

In one example, a system for controlling access of applications on a user's computing device, the system comprising: at least one processor configured to: intercept access by a process of first information to be displayed on the user's device; determine second information based on the interception of the access by the process, the second information associated with the process; determine a region on a display of the user's device associated with the first information; analyze one or more intersections between the region and at least one graphic interface associated with the process; and block the access by the process to the first information based on the analysis of the one or more intersections between the region and the at least one graphic interface associated with the process.

In one example, non-transitory computer-readable medium storing computer executable instructions for controlling access of applications on a user's computing device, comprising instructions for: intercepting access by a process of first information to be displayed on the user's device; determining second information based on the interception of the access by the process, the second information associated with the process; determining a region on a display of the user's device associated with the first information; analyzing one or more intersections between the region and at least one graphic interface associated with the process; and blocking the access by the process to the first information based on the analysis of the one or more intersections between the region and the at least one graphic interface associated with the process.

The above simplified summary of examples of the invention serves to provide a basic understanding of the invention. This summary is not an extensive overview of all contemplated examples, and is intended to neither identify key or critical elements of all examples nor delineate the scope of any or all examples of the invention. To the accomplishment of the foregoing, the one or more examples of the invention include the features described and particularly pointed out in the claims.

**Brief Description of the Drawings**

The accompanying drawings, which are incorporated into and constitute a part of this specification, illustrate one or more examples of the present invention and, together with the detailed description, serve to explain their principles and implementations thereof.

**Fig. 1** illustrates a structural diagram of an exemplary system for blocking access to protected applications on a user's computing device.

**Fig. 2** shows a flow diagram of an exemplary method for blocking access to protected applications on a user's computing device.

**Fig. 3** shows an example of a general-purpose computer system on which the systems and methods blocking access to protected applications can be implemented.

**Detailed Description**

Examples on the invention are described herein in the context of a system, method and computer program product for blocking access to protected applications on a computing device. Those of ordinary skill in the art will realize that the following description is illustrative only and is not intended to be in any way limiting. Other examples will readily suggest themselves to those skilled in the art having the benefit of this disclosure. Reference will now be made in detail to implementations of the examples of the invention as illustrated in the accompanying drawings. The same reference indicators will be used to the extent possible throughout the drawings and the following description to refer to the same or like items.

The following terms will be used in describing examples of the invention:

A malicious application may be an application able to cause harm to a computer or to the data of the user of the computer. Examples of malicious applications may include an Net worm, a keyboard tracker, and/or a computer virus. The harm caused by a malicious program may include unlawful access to the resources of the computer, including the data being stored on the computer (e.g., for the purpose of theft), as well as unlawful use of the resources, including for storage of data, performing computations, and so on.

A trusted application may be an application which does not cause harm to a computer or to its user. A trusted application may include an application which has been developed by a trusted software manufacturer, downloaded from a trusted source (such as a site listed in a database of trusted sites), and/or associated with an identifier (e.g., the MD5 of the application file) that may be stored in a database of trusted applications. The identifier of the manufacturer, such as a digital certificate (e.g., associated with a trusted application), may also be stored in the database of trusted applications.

A non-trusted application may be an application which is not trusted, but also not recognized as harmful, for example using an antivirus application.

A malicious file may be a file which is a component of a malicious application.

A non-trusted file may be a file which is a component of a non-trusted application.

A trusted file may be a file which is a component of a trusted application.

A malicious process may be a process running from a malicious application.

A non-trusted process may be a process running from a non-trusted application.

A trusted process may be a process running from a trusted application.

Access to information being displayed to a user may include at least a call of a system function as a result of which the binary representation of the information being displayed to the user is loaded into the memory (e.g., RAM) of the computing device. An example of such a function is the WinAPI function BitBlt.

A danger rating of access to information being displayed to a user (in short, an access danger rating) may be a number (such as one from 0 to +∞; or from 0 to 1000, where if the rating is higher than 1000 when calculated, its value is taken as being 1000), which may be higher as the access to the information being displayed to the user is more characteristic of a malicious process.

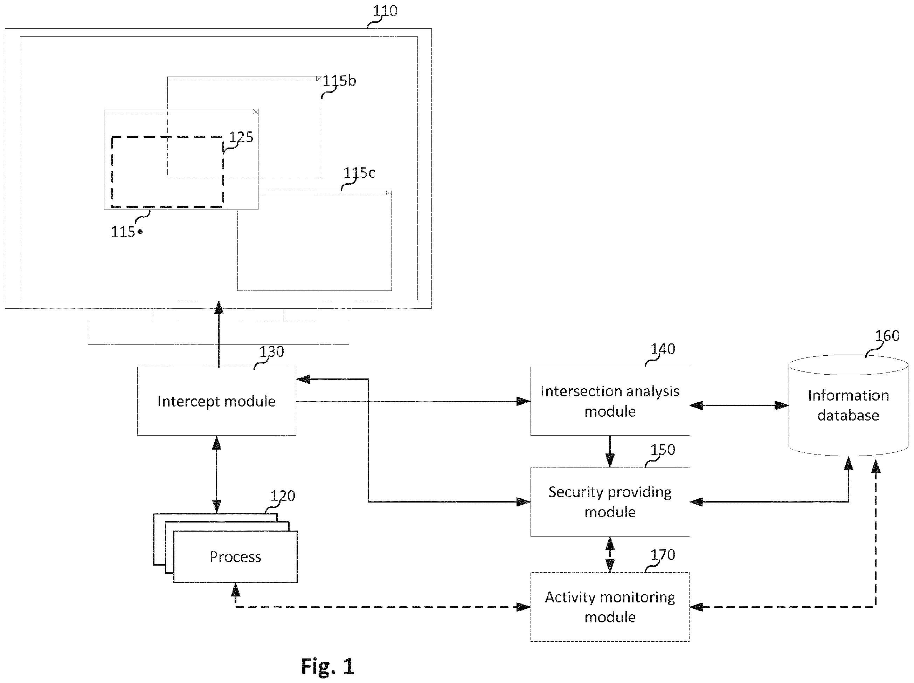

**Fig. 1** illustrates a structural diagram of an exemplary system for blocking access to protected applications on a user's computing device. The system includes the following components: an intercept module **130,** an intersection analysis module **140,** a security providing module **150.** In one example, the system further includes an information database **160.** Said system may reside on the user's computing device (for example, a PC, notebook, smart phone, or other computing device), which for simplicity shall be called a "computing device", and a detailed description of which will be provided further below.

In one example, the computing device contains a display **110** (for example, said display **110** may not be part of the computing device, but rather be connected to it along with other input/output devices). The display **110** may display information to the user of the computing device (hereinafter, the "user"), and the displayed information may include text, graphic images, and so on. The information may be displayed by various elements of a graphic interface (for example, the task panel in the Windows operating system) of the operating system (OS), and also via elements of a graphic interface **115** (**115a, 115b,** and **115c**) of the processes **120** being executed on the computing device. In one example, such an element of the graphic interface may be a process window **120.** In another example, the element of the graphic interface **115** can be a process widget **120.** In yet another example, the element of the graphic interface **115** can be a pop-up window. In yet another example, the element of the graphic interface **115** can be an icon of the application from which the process **120** was launched, an icon of the process **120** in the notification panel (status bar for OS Android or tray for OS Windows). The processes **120** being executed on the computing device may be launched from applications which are present on at least the same computing device. In one example, said applications may be present on another computing device (for example, on a remote server or a network disk). In one example, the processes **120** being executed may include processes not having elements of the graphic interface **115.**

In one example, the intercept module **130** may be configured to intercept access of the process to the information being displayed. The intercept module **130** may be configured to determine at least: (1) information about the process **120** implementing the access to the information being displayed to the user, said information including at least the identifier of the mentioned process **120** (e.g., the process identifier, PID); and (2) the region **125** on the display **110** of the computing device in which region information is being displayed to the user, and to which access is being implemented by the process **120.**

The determination of the region **125** on the display **110** of a computing device may be at least a determination of the location of the region. In one example, the location of the region **125** on the display **110** of a computing device can be the vertex coordinates of the region **125** or the coordinates of one of the vertices (such as upper left) and the dimensions of the region **125** - its height and width. The region **125** may have a rectangular shape. In yet another example, the region may have an arbitrary shape, the determination of such a shape may be based on determination of a function which describes the exact or approximate (e.g., with a specified accuracy) location of points on the border of the region. Access to the information being displayed to the user may be at least the calling of a function (such as a system function), as a result of which the binary representation (bitmap) of the information being displayed to the user may be loaded into the computing device memory. In one example, said memory can be the RAM of the computing device. An example of such a function may be the Windows API function BitBlt. In one example, such a function can be DrvCopyBits. In yet another example, such a function can be PrintWindow, StretchBlt or PlgBlt.

To carry out the intercepting, the intercept module **130** may be realized as a driver. In one example, this driver intercepts the call of the function BitBlt or PrintWindow. Upon intercepting this function call using the driver, it is possible to determine the context of the call: the process identifier (PID) and/or the thread identifier (TID). The data so obtained may be the aforementioned information about the process. The location of the region **125** may be determined by the corresponding parameters of the function called (and afterwards intercepted): nHeight, hdcSrc, nXSrc, nYSrc.

In the OS Windows version 8 and later, there is a component PatchGuard which protects the OS against changing of certain critical structures and tables of the operating system (such as the system call table, the global descriptor table, the interrupt descriptor table, and so forth). This component does not allow the aforementioned approach to the intercepting of access to be carried out on the driver level. In one example, the intercept module **130** can be realized in the form of a component of the DWM (Desktop Windows Manager) subsystem for displaying of elements of the graphic interface **115** of processes **120.** Such a component may be embedded in the form of a dll-file, which may be loaded into the address space of the process dwm.exe. After the calling of the function BitBlt by a certain process **120,** a chain of function calls may ensue (NtGdiBitBlt, DwmSyncCaptureScreenBits), as a result of which DWM may receive an LPC (local procedure call) request, which may be intercepted by the intercept module **130.** Information about the process **120** implementing the access to the information being displayed to the user is found in the header of this request: the PID and TID. The data obtained in this way may be information about the aforementioned process. The location of the region **125** may be determined by the corresponding parameters of the function called via the LPC request (nHeight, hdcSrc, nXSrc, nYSrc).

In yet another example, the intercept module **130** may be realized in the form of a driver which intercepts access by applications to the display driver (such as the cdd.dll - Canonical Display Driver). In the given case, the intercept module **130** may intercept the call of the function to copy the surface DrvCopyBits. Upon intercepting this function call using the driver, the context of the call can be determined: the PID (Process Identifier) and TID (Thread Identifier). The data so obtained may be the aforementioned information on the process. Moreover, in the call of the function for accessing the surface, the intercept module **130** may determine the identifier of the surface being accessed. Using the surface identifier, the intercept module **130** may determine the region being accessed - the coordinates and dimensions. The location of the region **125** may be determined by the corresponding parameters of the function called (the parameter pptlSrc).

In yet another example, the determination of the location of the region **125** on the display **110** of the computing device may include the determination of the device context, which may correspond to the region **125,** and within which the information displayed to the user may be being accessed (in other words, the device context indicated as a function call parameter). In one example, the device context may be a parameter of the call of the intercepted function hdcSrc (for example, for the functions BitBlt, PlgBlt and StretchBlt).

In yet another example, the determination of the location of the region **125** on the display **110** of the computing device may include determination of the surface corresponding to the region **125** being accessed via the intercepted function call. In one example, the surface (specifically, the pointer to the structure SURFOBJ) is the parameter psoSrc of the intercepted function call DrvCopyBits.

In yet another example, the determination of the location of the region **125** on the display **110** of the computing device includes determination of the identifier of the window (window handle) corresponding to the region **125** being accessed via the intercepted function call. In one example, the window identifier may be the parameter hwnd of the intercepted function call PrintWindow.

The information determined by the intercept module **130** as to the process **120** implementing the access to the information being displayed to the user, and also the region **125** on the display **110** of the computing device (in particular, information describing the region - the location of the region **125** on the display **110** of the computing device) where information is being displayed to the user, and which information is being accessed, may be relayed by the intercept module **130** to the intersection analysis module **140.** The information determined by the intercept module **130** about the process **120** implementing the access to the information being displayed to the user is also relayed to the security providing module **150.**

In one example, if the region **125** on the display **110** of the computing device, as determined by the intercept module **130,** corresponds to the process **120** which is implementing the intercepted access, no further analysis is done in regard to such access, and the process **120** implementing the intercepted access continues its execution. In one example, the region **125** corresponds to the process **120** if the surface as determined by the intercept module **130** corresponds to the process **120.** In yet another example, the region **125** corresponds to the process **120** if the window identifier as determined by the intercept module **130** corresponds to the window of the process **120.** In another example, the region **125** corresponds to the process **120** if the device context as determined by the intercept module **130** corresponds to the process **120.**

The intersection analysis module **140** may be configured to analyze the intersections of the region **125** determined using the intercept module **130** on the display **110** of the computing device with the regions of elements of the graphic interface **115** of processes **120** being executed on the computing device in order to determine which of the regions of the elements of the graphic interface **115** of the mentioned processes **120:** contain the mentioned region **125;** are contained in the mentioned region **125;** and/or partly intersect with the mentioned region **125.**

In one example, during the aforementioned analysis the intersection analysis module **140** compares the location of the regions of all elements of the graphic interface **115** of the processes **120** being executed on the computing device with the location of the region **125** determined by the intercept module **130.** In one example, the location of the regions of the elements of the graphic interface **115** of the processes **120** is determined by the intersection analysis module **140** on the basis of data about the elements of the graphic interface **115** (specifically, their location and dimensions) of the processes **120** which may be provided by the operating system. In one example, such data may be provided by the OS in response to a call of the function GetWindowRect.

In yet another example, the location of the regions of the elements of the graphic interface **115** of the processes **120** may be determined by the intersection analysis module **140** on the basis of data about the surfaces and their locations. Such data is obtained by the intersection analysis module **140** by intercepting the function calls for creating the surfaces DrvEnableSurface, specifically the value being returned - the pointer to the structure SURFOBJ, indicating the location of the surface corresponding to the element of the graphic interface **115** of the process **120.**

In another example, the intersection analysis module **140** determines which of the regions of the elements of the graphic interface **115** of the processes **120** contain the region **125,** are contained in the region **125** or partly intersect with the region **125,** if the device context as determined by the intercept module **130,** within which context access is being implemented to the information being displayed to the user (or the surface being accessed), coincides with the device context of the desktop, or if the window identifier as determined by the intercept module **130,** being the parameter of the intercepted function, is the desktop identifier.

**Fig. 1** also shows an example of the location of the elements of the graphic interface **115** of processes **120** being executed on a computing device. By comparing the location of the region **125,** and also the location of the regions of the elements of the graphic interface **115,** the intersection analysis module **140** determines that the region of the element of the graphic interface **115a** of the process **120** contains (entirely) within itself the region **125,** the region of the element of the graphic interface **115b** of the process **120** partly intersects with the region **125,** and the region of the element of the graphic interface **115c** of the process **120** does not intersect with the region **125.** In one example, the decision as to how the region **125** is situated with respect to the region of the element of the graphic interface **115** may be made on the basis of the vertex coordinates of the region **125** and the region of the element of the graphic interface **115.** In yet another example, the decision as to how the region **125** is situated with respect to the region of the element of the graphic interface **115** may be made on the basis of the coordinates of one vertex (such as upper left), and also the dimensions (height and width) of the region **125** and of the element of the graphic interface **115.**

In yet another example, the intersection analysis module **140** may determine the intersection fraction - the ratio of the dimension of the region **125** to the dimension of the region of intersection of the region **125** and the region of the element of the graphic interface **115.** For example, for the region of the element of the graphic interface **115a** the intersection fraction will be equal to 1, for the region of the element of the graphic interface **115b** - 1/3, and for the region of the element of the graphic interface **115c** this intersection fraction will be equal to 0 (no intersection).

In yet another example, the intersection analysis module **140** may determine the element of the graphic interface **115** of the process **120** as containing the region **125** if this element of the graphic interface **115** is a window, and the device context of this window (which can be determined using the function call WinAPI GetDC) corresponds to the device context previously determined using the intercept module **130** within which access is being implemented to the information being displayed to the user. In this case, the intersection fraction is equal to 1. For all other processes **120,** it may be considered that their elements of the graphic interface **115** do not intersect with the region **125.**

In yet another example, the intersection analysis module **140** determines the element of the graphic interface **115** of the process **120** as containing the region **125** if this element of the graphic interface **115** is a window, and the surface which corresponds to the region **125** being accessed via the intercepted function call is the surface of this window. In this case, the intersection fraction is equal to 1. For all other processes **120,** it may be considered that their elements of the graphic interface **115** do not intersect with the region **125.**

In yet another example, the intersection analysis module **140** may determine the element of the graphic interface **115** of the process **120** as containing the region **125** if this element of the graphic interface **115** is a window, and the identifier of this window (HWND) coincides with the identifier of the window which corresponds to the region **125** and was previously determined using the intercept module **130.** In this case, the intersection fraction is equal to 1. For all other processes **120,** it may be considered that their elements of the graphic interface **115** do not intersect with the region **125.**

The intersection analysis module **140** may further calculate the importance rating as determined using the intercept module **130** for the region **125** on the display of the computing device **110** on the basis of which of the regions of the elements of the graphic interface **115** of the processes **120** being executed on the computing device contain the aforementioned region **125,** which of the regions of the elements of the graphic interface **115** are contained in the aforementioned region **125,** and/or which of the regions of the elements of the graphic interface **115** partly intersect with the aforementioned region **125.** The importance rating of the region **125** may depend on whether the information which is being displayed to the user using processes **120** whose regions of the elements of the graphic interface **115** contain, partly intersect with the mentioned region **125,** or are contained in the mentioned region **125,** is confidential. The higher the importance rating of the region **125,** the greater the likelihood that the mentioned information is confidential. In one example, to calculate the importance rating of the region **125** use is also made of the intersection fraction of the region **125** with the regions of the elements of the graphic interface **115** of the processes **120.**

In one example, the confidentiality of the information which is being displayed to the user via the process **120** whose region of the elements of the graphic interface **115** contains, partly intersects with the region **125,** or is contained in the mentioned region **125,** may be determined using the information database **160,** which is linked to the intersection analysis module **140.** The information database **160** stores the coefficients of confidentiality of the elements of the graphic interface **115** of the processes **120,** expressed as a number. The higher the coefficient of confidentiality of the element of the graphic interface **115** of the process **120,** the greater the likelihood that the element of the graphic interface **115** of this process **120** may display confidential information to the user. It is assumed that the processes **120** of applications for remote working with banks, processes **120** launched in "secure mode" (so-called "sandbox"), processes **120** of applications for working with email, and also child processes of those processes (for example, the process winword.exe, in which an attachment in an email is opened) with high probability are displaying confidential information via their elements of the graphic interface **115** (such as via their windows).

In one example, the information which may be stored in the information database **160** may be formulated by a specialist in the field of computer security and written into the database **160** by the intersection analysis module **140,** which may obtain this information from a remote security server or a system administrator.

In yet another example, an activity monitoring module **170** is additionally included in the system for detection of a malicious application. The activity monitoring module **170** may be configured to track the actions being performed by the processes **120,** and also to calculate the coefficients of confidentiality corresponding to the elements of the graphic interface **115** of the processes **120** on the basis of the actions being performed by the processes **120.** In one example, the coefficients of confidentiality calculated by the activity monitoring module **170** may be sent to the information database **160** (if the information database **160** is already storing the values of the coefficients of confidentiality, their values will be updated). In another example, the calculated confidentiality coefficients may be sent by the activity monitoring module **170** to the security providing module **150,** which in turn uses these coefficients along with those which the security providing module **150** may obtain from the information database **160.** The actions being carried out by the process **120** refer to the system calls or sets of system calls being carried out by the process **120.** In yet another example, an action may include the sending/receiving of an electronic communication (such as an email, a voice message, or an instant messaging communication). To carry out the tracking, the activity monitoring module **170** may be or may include a driver or a set of drivers, using which a determination may be made of the system calls (e.g., via intercepting) which are being carried out by the processes **120** - thereby implementing a tracking. Determination of a system call may include determination of the process **120** which is implementing this call, as well as the arguments of the call. In one example, by using drivers, the activity monitoring module **170** determines the function calls for the launching of the processes (such as LoadModule, CreateProcess, CreateProcessAsUser, ShellExecute, WinExec and so forth), as well as network interaction functions (such as connect, socket, bind, receive, send and so forth). It should be kept in mind that the possibilities for determination of network calls are not limited to the examples given for the use of drivers. In yet another example the activity monitoring module **170** may be or may include a plug-in for the application from which the process **120** is launched, and using the plug-in there may be a determination of information about the message which was sent or received by this process **120.** In one example, such information may be the sender of the message, the recipient of the message, the subject of the message, the content of the message, the type of message - incoming or outgoing. In yet another example, using such a plug-in the activity monitoring module **170** determines the author of the document, such as the author of the document Microsoft Word, where the authorship may be indicated in the header of the document (of the document file) when the document is created or modified.

In one example, the activity monitoring module **170** may calculate the coefficients of confidentiality for the elements of the graphic interface **115** of the processes **120** using heuristic rules. The purpose of using heuristic rules is to establish high coefficients of confidentiality of the elements of the graphic interface **115** of those processes **120** with which confidential information, or any other information whose theft is undesirable, can be displayed to the user. An example of such heuristic rules may be:

- establish the maximum value of the coefficient of confidentiality for the elements of the graphic interface **115** of those processes **120** which establish protected network connections (such as https);
- establish the maximum value of the coefficient of confidentiality for the elements of the graphic interface **115** of those processes **120** which establish connections with remote servers from a list of protected remote servers;
- establish the maximum value of the coefficient of confidentiality for the elements of the graphic interface **115** of those processes **120** which are launched from a list of protected applications;
- establish the maximum value of the coefficient of confidentiality for the elements of the graphic interface **115** of those processes **120** which open documents created by authors from a list of protected authors;
- establish the maximum value of the coefficient of confidentiality for the elements of the graphic interface **115** of those processes **120** which receive messages from addressors (or send messages to addresses) from a list of protected contacts.

The information database **160** saves the addresses (IP addresses) of the remote servers (such as banking or email servers) appearing on the list of protected remote servers. The list of protected applications may be a list of applications which may be stored in the database **160** (for example, applications for working with banks, applications for preventing leaking of information - DLP, Data Leak Prevention, and so on). The list of protected contacts may be a list of contacts (such as the names or email addresses of senders or recipients of messages) which may be stored in the database **160.** The list of protected authors may be a list of authors (for example, the name of the user who created a document) which may be stored in the database **160.**

In one example, the maximum value of the coefficient of confidentiality may be, for example, $10^9$. In yet another example, the maximum value of the coefficient of confidentiality may be a number not less than a threshold value which is used by the security providing module **150** (about which more will be said below). In yet another example, the maximum value of this coefficient of confidentiality may be the maximum numerical value which can be stored in the information database.

It should be noted that the activity monitoring module **170** need not calculate for a process **120** the coefficients of confidentiality of all of the elements of the graphic interface **115** of the process **120.** In the general case, the activity monitoring module **170** only calculates, for a process **120,** the coefficients of confidentiality of those elements of the graphic interface **115** whose value needs to be established according to the heuristic rules being used by the activity monitoring module **170.**

In yet another example, the desktop in the OS may also be an element of the graphic interface **115** (like the windows of the processes **120**), corresponding (e.g., belonging) to the process explorer.exe, and accordingly the information database **160** may store the coefficient of confidentiality of the element of the graphic interface **115** (desktop). In one example, the value of this coefficient of confidentiality may be the maximum value of the coefficient of confidentiality.

In one example, the activity monitoring module **170** may calculate the coefficients of confidentiality of the elements of the graphic interface **115** for each process **120** launched on the computing device. In yet another example, the activity monitoring module **170** may calculate the coefficients of confidentiality of the elements of the graphic interface **115** of the processes **120** about which information is being stored in the information database **160,** this information being, for example, the process identifier or the process designation (such as winword.exe).

In one example, the intersection analysis module **140** may calculate the importance rating of the region **125** by the following formula:

$$K = \sum_{i=1}^n k_i.$$

In yet another example, the intersection analysis module **140** may calculate the importance rating of the region **125** by the following formula:

$$K = \sum_{i=1}^n s_i * k_i.$$

In yet another example, the intersection analysis module **140** may calculate the importance rating of the region **125** by the following formula:

$$K = \sum_{i=1}^n p_i * k_i.$$

In yet another example, the intersection analysis module **140** may calculate the importance rating of the region **125** by the following formula:

$$K = \sum_{i=1}^n s_i * k_i * p_i.$$

In yet another example, the intersection analysis module **140** may calculate the importance rating of the region **125** by the following formula:

$$K = \sum_{i=1}^n (k_i * p_i)^{s_i}.$$

The formulas indicated above make use of the following denotations:

- K may be the importance rating of the region **125;**
- n may be the number of elements of the graphic interface **115** of the processes **120** which are being displayed on the display **110** of the computing device;
- $p_i$ may be the coefficient of confidentiality of the i-th element of the graphic interface **115** (in one example, taking on the value 1 for the i-th element of the graphic interface if a corresponding coefficient is not indicated in the database **160** for this element of the graphic interface **115** of the process **120**);
- $k_i$ may be the intersection fraction of the region **125** with the region of the i-th element of the graphic interface **115;**
- $s_i$ may be a weighting factor, being equal for the i-th element of the graphic interface to:

    ◦ 1, if the region of the i-th element of the graphic interface **115** partly intersects the region **125;**
    ◦ S1, where S1 > 1 (such as 100), if the region of the i-th element of the graphic interface **115** contains the region **125;**
    ◦ S2, where S2>S1 (such as 200), if the region of the i-th element of the graphic interface **115** is contained in the region **125.**

In one example, the coefficient of confidentiality $p_i$ of the i-th element of the graphic interface **115** of a certain process **120a** may be equal to the maximum of the coefficients of confidentiality of the elements of the graphic interface **115** of the processes **120** which are parent processes in relation to the process **120a**. In yet another example, the coefficient of confidentiality $p_i$ of the i-th element of the graphic interface **115** of the process **120a** may be equal to the maximum of the coefficients of confidentiality of the i-th element of the graphic interface **115** of the process **120a** and the coefficients of confidentiality of the elements of the graphic interface **115** of its N parent processes **120** (where N, for example, can be equal to 2, if the process **120a** has 2 parent processes).

It should be understood that the above given formulas are merely examples, examples, and that any other formula whereby the importance rating of the region **125** will be larger as the coefficients $p_i$, $k_i$, $s_i$ are higher can be used to calculate the importance rating of the region **125** by the intersection analysis module **140**.

The intersection analysis module **140** relays the calculated importance rating of the region **125** to the security providing module **150**.

The security providing module **150** is designed to calculate the access danger rating (e.g., as defined above) for the information being displayed to the user on the basis of the information which is provided by the intercept module **130** about the process **120** accessing the information being displayed to the user, in order to calculate a combination of the danger rating for access to the information being displayed to the user and the importance rating of the region, as well as to recognize as malicious the application from which the process **120** was launched, whose accessing of the information being displayed to the user of the computing device was intercepted by the intercept module **130** if the combination of the danger rating for access to the information being displayed to the user and the importance rating of the region exceeds the established threshold value.

In one example, the security providing module **150** may calculate the access danger rating **125** according to the following formula:

$$D = S * V * A.$$

In yet another example, the security providing module **150** may calculate the access danger rating **125** according to the following formula:

$$D = S + V + A.$$

In yet another example, the security providing module **150** may calculate the access danger rating **125** according to the following formula:

$$D = A^S * V.$$

The formulas given above make use of the following denotations:

- D may be the danger rating of the access being carried out by the process **120** to the region **125** and intercepted by the intercept module **130**;
- S may be a coefficient which takes on the following values:
  - 1, if the process **120** carrying out the intercepted access is a trusted process;
  - S1, where S1 > 1 (such as 5), if the process **120** carrying out the intercepted access is a non-trusted process (or the database **160** has no information that the process **120** is trusted);
- V may be a coefficient taking on the following values:
  - 1, if the process **120** carrying out the intercepted access was launched from an application for which there are no known vulnerabilities (or the database **160** has no information about known vulnerabilities);
  - V1, where V1 > 1, if the process **120** carrying out the intercepted access was launched from an application for which there are known vulnerabilities (where V1 can be a fixed number, such as 10, or a number depending on the number of known vulnerabilities, such as V1 = 2 * U, where U is the number of known vulnerabilities);
- A may be a coefficient taking on the following values:
  - 1, if the process **120** carrying out the intercepted access was launched from an application whose functionality includes the implementing of access to information being displayed to the user (or the database **160** has no information about the functionality of said application);
  - A1, where A1 > 1 (such as 100), if the process **120** carrying out the intercepted access was launched from an application whose functionality does not include the implementing of access to information being displayed to the user.

It should be understood that the above given formulas are merely examples and that any other formula whereby the access danger rating will be larger as the coefficients A, S and V are higher can be used by the security providing module **150** to calculate the danger rating of access to the information being displayed on the display **110** by the process **120**. In one example, the value of the access danger rating D cannot be less than 1.

In one example, the information on whether the application from which the process **120** performing the intercepted access was launched is trusted or non-trusted may be stored in the information database **160** and provided to the security providing module **150.**

In one example, the information on whether known vulnerabilities exist for the application from which the process **120** performing the intercepted access was launched and how many such vulnerabilities are known may be stored in the information database **160** and provided to the security providing module **150.**

In one example, the information on whether the functionality of the application from which the process **120** performing the intercepted access was launched includes the accessing of the information being displayed to the user may be stored in the information database **160** and provided to the security providing module **150.** The functionality of an application may include the set of functions whose calls are characteristic of the process launched from the application. Accordingly, the information database **160** in one example may assign, to the application from which the process **120** was launched, a list of functions characteristic for the mentioned application - the functionality of the application.

As noted above, in one example, the information which is stored in the information database **160** may be formulated by a specialist in computer security. In one example, this specialist himself may transfer (e.g., write) this information into the information database **160.** In another example, this information may be written into the information database **160** by the intersection analysis module **140,** which obtains this information from a remote security server or a system administrator.

It should be noted that the information database **160,** in one example, may be or may include a group of databases, each of which may be designed to store data of one or more types - for example, coefficients of confidentiality $p_i$, weighting factors $s_i$, which are used in the above-described formulas, and so on.

After calculating the access danger rating, the security providing module **150** may make a decision whether or not to recognize as malicious the application from which the process **120** performing the access intercepted by the intercept module **130** was launched. This decision may be made by the security providing module **150** on the basis of a comparison of the combination of the access danger rating and the importance rating of the region **125** with a previously established threshold value: if the combination of the danger rating of access to the information being displayed to the user and the importance rating of the region **125** is greater than the established threshold value (for example, 1000), then the application from which the process **120** whose accessing of the information being displayed to the user was intercepted by the intercept module **130** was launched may be recognized as malicious. Otherwise, the mentioned application may not be recognized as malicious by the security providing module **150.** As the combination in this case one can use the sum, the multiplication, or any other combination which is higher as the importance rating of the region **125** and the access danger rating are higher.

In yet another example, the security providing module **150** can send a command to the intercept module **130** to block access to the information being displayed to the user. The intercept module **130** may interrupt the call of the corresponding function (for example, by transfer of control to an instruction whose address is the return address of the function which was called) which may be carrying out the mentioned access. In yet another example, the blocking of access may be done by the intercept module **130** by substituting, in the memory of the computing device, the binary representation of the information being displayed to the user, which binary representation was loaded into memory via calling of the function used to carry out said access. In one example, the security providing module **150** may send a command to block access to the information if the combination of the danger rating of access to the information being displayed to the user and the importance rating of the region **125** is greater than an established threshold value (the algorithm for calculating this combination has been given above).

In one example, the security providing module **150,** after recognizing a certain application as malicious in accordance with the above described scheme, may additionally send a command to the intercept module **130** to block access to the information being displayed to the user, which access is being carried out by the process **120** launched from the application recognized as being malicious.

In one example, the security providing module **150** may make a decision to recognize an application as malicious or to block access to the information being displayed solely on the basis of the importance rating of the region **125:** if the importance rating of the region **125** is greater than an established threshold value, the application from which the process **120** carrying out the access to the information being displayed to the user was launched may be recognized as being malicious. Otherwise, said application is not recognized as malicious.

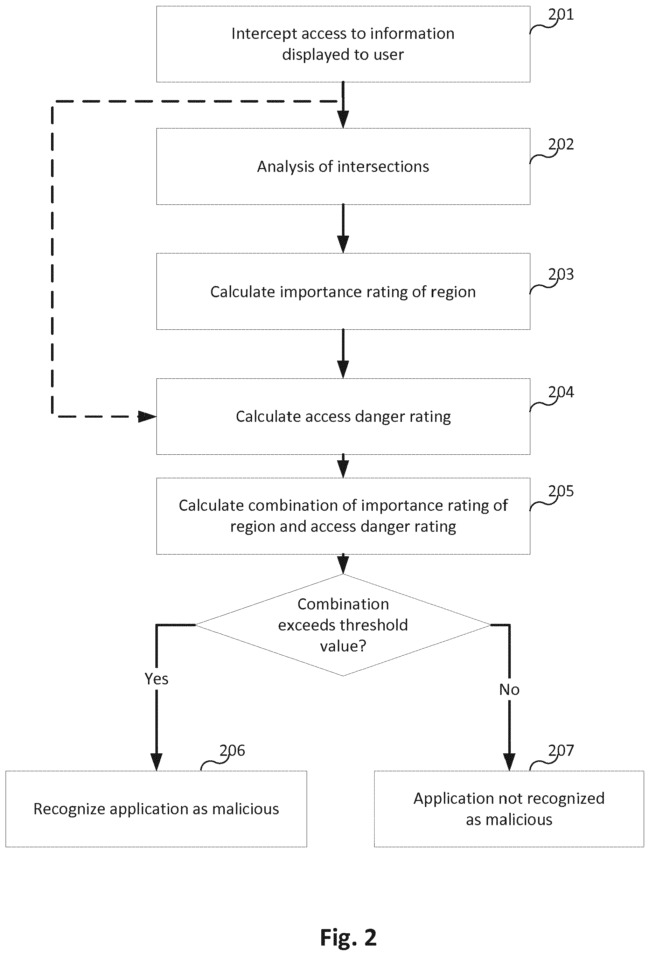

**Fig. 2** shows a flow diagram of an exemplary method for blocking access to protected applications on a user's computing device. In step **201,** the intercept module **130** intercepts the access of the process **120** to the information being displayed to the user in order to determine at least: information about the process **120** carrying out the access to the information being displayed to the user, and/or the region on the display **110** of the computing device where the information is being displayed to the user, and which is being accessed. The information so obtained about the process may be sent by the intercept module **130** to the security providing module **150** and/or the intersection analysis module **140,** and the region **125** so determined may be sent to the intersection analysis module **140.** In step **202** the intersection analysis module **140** may analyze the intersection of the region **125** determined by the intercept module **130** with the region(s) of the elements of the graphic interface **115** of the processes **120** being executed on the computing device in order to determine which of the regions of the elements of the graphic interface **115** of the mentioned processes: contain the mentioned region, are contained in the mentioned region, an/or partly intersect with the mentioned region. The information on the intersection(s) may be used by the intersection analysis module **140** in step **203** to calculate the importance rating of the region **125**. The calculated importance rating of the region **125** may be sent by the intersection analysis module **140** to the security providing module **150**. The security providing module **150**, in step **204**, may calculate the danger rating of the access to the information being displayed to the user on the basis of the data obtained from the intercept module **130** - information about the process carrying out the access which was intercepted by the intercept module **130**. In step **205**, the security providing module **150** may calculate the combination of the importance rating of the region **125** and the access danger rating. Then, if the combination obtained in step **205** is larger than a threshold value, in step **206** the security providing module **150** may recognize as malicious the application from which the process **120** was launched whose access to the information being displayed to the user of the computing device was intercepted in step **201**. However, if the obtained combination does not exceed the threshold value, then, in step **207**, the security providing module **150** does not recognize the mentioned application as being malicious.

It should be noted that step **204** may not depend on carrying out steps **202** and **203**, and therefore step **204** may be performed in parallel with the performance of these steps or prior to these steps.

In yet another example, the system for detection of a malicious application further includes an activity monitoring module **170**, which calculates the coefficients of confidentiality of the elements of the graphic interface **115** of the processes **120**, for example, based on one or more heuristic rules (this step is not indicated in **Fig. 2** and may not depend on the performance of steps **201** and **202**, and therefore may be performed in parallel with the performance of these steps or prior to these steps).

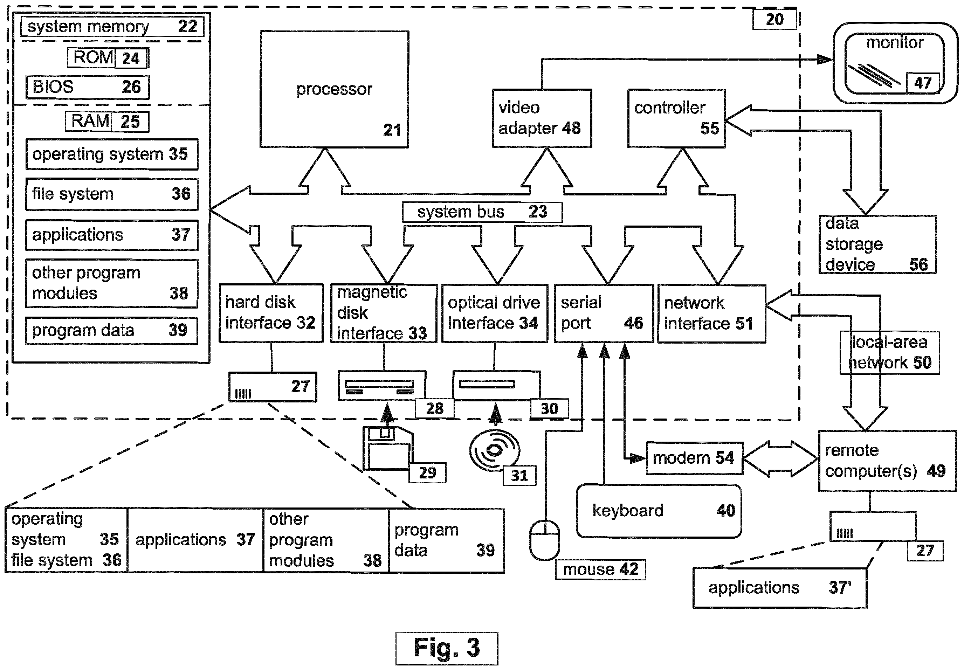

**Fig. 3** is a diagram illustrating a general-purpose computer system on which examples of systems and methods for blocking access to protected applications may be implemented. As shown, the computer system **20** (which may be a personal computer or a server) includes a central processing unit **21**, a system memory **22** and a system bus **23** connecting the various system components, including the memory associated with the central processing unit **21**. As will be appreciated by those of ordinary skill in the art, the system bus **23** may comprise a bus memory or bus memory controller, a peripheral bus, and a local bus that is able to interact with any other bus architecture. The system memory may include permanent memory (ROM) **24** and random-access memory (RAM) **25**. The basic input/output system (BIOS) **26** may store the basic procedures for transfer of information between elements of the computer system **20,** such as those at the time of loading the operating system with the use of the ROM **24**.

The computer system **20,** may also comprise a hard disk **27** for reading and writing data, a magnetic disk drive **28** for reading and writing on removable magnetic disks 29, and an optical drive **30** for reading and writing removable optical disks **31,** such as CD-ROM, DVD-ROM and other optical media. The hard disk **27,** the magnetic disk drive **28,** and the optical drive **30** are connected to the system bus **23** across the hard disk interface **32,** the magnetic disk interface **33** and the optical drive interface **34,** respectively. The drives and the corresponding computer information media are power-independent modules for storage of computer instructions, data structures, program modules and other data of the computer system **20**.

In one example, the system includes a hard disk **27,** a removable magnetic disk **29** and a removable optical disk **31** connected to the system bus **23** via the controller **55**. It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36,** in which the operating system **35,** may be stored, as well as additional program applications **37,** other program modules **38,** and program data **39**. A user of the computer system **20** may enter commands and information using keyboard 40, mouse 42, or any other input device known to those of ordinary skill in the art, such as, but not limited to, a microphone, joystick, game controller, scanner, *etc.*. Such input devices typically plug into the computer system **20** through a serial port **46,** which in turn is connected to the system bus, but those of ordinary skill in the art will appreciate that input devices may be also be connected in other ways, such as, without limitation, via a parallel port, a game port, or a universal serial bus (USB). A monitor **47** or other type of display device may also be connected to the system bus **23** across an interface, such as a video adapter **48**. In addition to the monitor **47,** the personal computer may be equipped with other peripheral output devices (not shown), such as loudspeakers, a printer, *etc*.

Computer system **20** may operate in a network environment, using a network connection to one or more remote computers **49**. The remote computer (or computers) **49** may be local computer workstations or servers comprising most or all of the aforementioned elements in describing the nature of a computer system **20**. Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and they generally have access to the Internet. In LAN or WAN networks, the personal computer **20** is connected to the local-area network **50** across a network adapter or network interface **51.** When networks are used, the computer system **20** may employ a modem **54** or other modules well known to those of ordinary skill in the art that enable communications with a wide-area computer network such as the Internet. The modem **54,** which may be an internal or external device, may be connected to the system bus **23** by a serial port **46.** It will be appreciated by those of ordinary skill in the art that said network connections are non-limiting examples of numerous well-understood ways of establishing a connection by one computer to another using communication modules.

In various examples, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various examples, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in Fig. *3, supra).* Accordingly, each module may be realized in a variety of suitable configurations, and should not be limited to any particular implementation exemplified herein.

In the interest of clarity, not all of the routine features of the examples are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various examples disclosed herein encompass present and future known equivalents to the known modules referred to herein by way of illustration. Moreover, while examples and applications have been shown and described, it would be apparent to those skilled in the art having the benefit of this disclosure that many more modifications than mentioned above are possible without departing from the inventive concepts disclosed herein. The invention is specified in the appended claims.

**Claims**

1.  A computer implemented method for controlling access of applications on a user's computing device, the method comprising:

    intercepting (201), by a driver, access of a process (120) to a region (125) on a display (110) of the user's device;
    determining, by the driver, first information of the process, the first information comprising at least an identifier of the process;
    determining a location of the region (125) on the display (110) of the user's device;
    analyzing (202) one or more intersections between the location of the region and one or more elements of a graphic interface (115) of one or more processes (120) being executed on the user's device;
    accessing, from an information database (160), one or more coefficients of confidentiality associated with one or more elements that at least partially intersect the region;
    calculating an importance rating of the region based on an algorithm that takes into account the one or more coefficients of confidentiality;
    accessing, from the information database, trust information about the process;
    calculating a danger rating of the process based on the trust information about the process;
    blocking the access by the process (120) to the region (125) based on a comparison of a combination of the danger rating of the process and the importance rating of the region with a previously established threshold value.

2. The method according to claim 1, wherein the determination of the location of the region comprises at least one of:

> determining a location on the display corresponding to the region;
> determining a device context that corresponds to the region;
> determining a surface corresponding to the region; or
> determining a window identifier corresponding to the region.

3. The method according to any of claims 1-2, wherein the analysis of the one or more intersections between the location of the region and the one or more elements of the graphic interface comprises: determining whether the one or more elements of the graphic interface contains, is contained, or at least partially intersects the region on the display.

4. The method according to any of claims 1-3, wherein the danger rating is a calculation corresponding to whether the information database (160) has no information indicating that the process (120) is trusted.

5. The method according to any of claims 1-4, further comprising:

> calculating the one or more coefficients of confidentiality; and
> storing the calculated one or more coefficients of confidentiality in the information database.

6. The method according to any of claims 1-5, wherein the blocking of the access by the process to the region comprises: substituting, in a memory of the computing device, a binary representation of information being displayed on the display (110) of the user's device.

7. The method according to any of claims 1-6, further comprising: determining whether an application associated with the process is able to cause harm to one or more of the user's device and data on the user's device based on the analysis of the one or more intersections between the location of the region and the one or more elements of the graphic interface.

8. A system for controlling access of applications on a user's computing device, the system comprising: at least one processor configured to:

intercept access of a process (120) to a region (125) on a display (110) of the user's device; determine first information of the process, the first information comprising at least an identifier of the process; determine a location of the region (125) on the display (110) of the user's device; analyze (202) one or more intersections between the location of the region and on or more elements of a graphic interface (115) of one or more processes (120) being executed on the user's device; access, from an information database (160), one or more coefficients of confidentiality associated with one or more elements that at least partially intersect the region; calculate an importance rating of the region based on an algorithm that takes into account the one or more coefficients of confidentiality; access, from the information database, trust information about the process; calculate a danger rating of the process based on the trust information about the process; block the access by the process (120) to the region (125) based on a comparison of a combination of the danger rating of the process and the importance rating of the region with a previously established threshold value.

9. The system according to claim 8, wherein the at least one processor is configured to determine the location of the region by at least one of:

> determining a location on the display corresponding to the region;
> determining a device context that corresponds to the region;
> determining of a surface corresponding to the region; or
> determining of a window identifier corresponding to the region.

10. The system according to any of claims 8-9, wherein the at least one processor is configured to analyze the one or more intersections between the location of the region and the one or more elements of the graphic interface by: determining whether the one or more elements of the graphic interface contains, is contained, or at least partially intersects the region on the display.

11. The system according to any of claims 8-10, wherein the danger rating is a calculation corresponding to whether the information database (160) has no information indicating that the process (120) is trusted.

12. The system according to any of claims 8-11, wherein the at least one processor is further configured to:

calculate the one or more coefficients of confidentiality; and
store the calculated one or more coefficients of confidentiality in the information database.

13. The system according to any of claims 8-12, wherein the at least one processor is configured to block the access by the process to the region by:
substituting, in a memory of the computing device, a binary representation of information being displayed on the display (110) of the user's device.

## Patentansprüche

1. Ein computerimplementiertes Verfahren zur Steuerung des Zugriffs von Anwendungen auf dem Computergerät eines Benutzers, wobei das Verfahren umfasst:

Abfangen (201) des Zugriffs eines Prozesses (120) auf einen Bereich (125) auf einem Bildschirm (110) des Geräts des Benutzers durch einen Treiber;
Bestimmen, durch den Treiber, von ersten Informationen des Prozesses, wobei die ersten Informationen mindestens eine Kennung des Prozesses umfassen;
Bestimmen einer Position des Bereichs (125) auf der Anzeige (110) des Geräts des Benutzers;
Analysieren (202) einer oder mehrerer Überschneidungen zwischen der Position des Bereichs und einem oder mehreren Elementen einer grafischen Benutzerschnittstelle (115) eines oder mehrerer Prozesse (120), die auf dem Gerät des Benutzers ausgeführt werden;
Zugreifen auf einen oder mehrere Vertraulichkeitskoeffizienten aus einer Informationsdatenbank (160), die mit einem oder mehreren Elementen verbunden sind, die den Bereich zumindest teilweise überschneiden;
Berechnen einer Wichtigkeitsbewertung des Bereichs auf der Grundlage eines Algorithmus, der den einen oder mehrere Vertraulichkeitskoeffizienten berücksichtigt;
Zugreifen auf Vertrauensinformationen über den Prozess aus der Informationsdatenbank;
Berechnen einer Gefahreneinstufung des Prozesses auf der Grundlage der Vertrauensinformationen über den Prozess;
Blockieren des Zugriffs durch den Prozess (120) auf den Bereich (125) auf der Grundlage eines Vergleichs einer Kombination aus der Gefahreneinstufung des Prozesses und der Wichtigkeitsbewertung des Bereichs mit einem zuvor festgelegten Schwellenwert.

2. Die Methode nach Anspruch 1, wobei die Bestimmung der Position des Bereichs mindestens eine der folgenden Möglichkeiten umfasst:

Bestimmen einer dem Bereich entsprechenden Position auf der Anzeige;
Bestimmen eines Gerätekontextes, der dem Bereich entspricht;
Bestimmen einer dem Bereich entsprechenden Oberfläche; oder
Bestimmen eines dem Bereich entsprechenden Fenster-Identifikators.

3. Die Methode nach einem der Ansprüche 1-2, wobei die Analyse der einen oder mehreren Überschneidungen zwischen der Position des Bereichs und dem einen oder mehreren Elementen der grafischen Benutzerschnittstelle Folgendes umfasst:
Bestimmen, ob das eine oder mehrere Elemente der grafischen Benutzerschnittstelle den Bereich auf der Anzeige enthält, in diesem enthalten ist oder diesen zumindest teilweise überschneidet.

4. Die Methode nach einem der Ansprüche 1-3, wobei die Gefahreneinstufung eine Berechnung ist, ob die Informationsdatenbank (160) keine Informationen hat, die darauf hinweisen, dass der Prozess (120) vertrauenswürdig ist.

5. Die Methode nach einem der Ansprüche 1-4, weiter umfassend:

Berechnen eines oder mehrerer Vertraulichkeitskoeffizienten; und Speichern des berechneten einen oder mehreren Vertraulichkeitskoeffizienten in der Informationsdatenbank.

6. Die Methode nach einem der Ansprüche 1-5, wobei die Sperrung des Zugangs durch den Prozess zu dem Bereich Folgendes umfasst:
Ersetzen einer binären Darstellung von Informationen, die auf der Anzeige (110) des Geräts des Benutzers angezeigt werden, in einem Speicher des Computergeräts.

7. Die Methode nach einem der Ansprüche 1-6, weiter umfassend:
Bestimmen, ob eine mit dem Prozess verbundene Anwendung in der Lage ist, ein oder mehrere Geräte und Daten auf dem Gerät des Benutzers zu schädigen, basierend auf der Analyse der einen oder mehreren Überschneidungen zwischen der Position des Bereichs und dem einen oder mehreren Elementen der grafischen Benutzerschnittstelle.

8. Ein System zur Steuerung des Zugriffs von Anwendungen auf dem Computergerät eines Benutzers, wobei das System umfasst:
mindestens einen Prozessor, der konfiguriert ist, um:

Zugriff eines Prozesses (120) auf einen Bereich (125) auf einem Bildschirm (110) des Geräts des Benutzers durch einen Treiber abzufangen;
erste Informationen des Prozesses zu bestimmen, wobei die ersten Informationen mindestens eine Kennung des Prozesses umfassen;
einer Position des Bereichs (125) auf der Anzeige (110) des Geräts des Benutzers zu bestimmen;
eine oder mehrere Überschneidungen zwischen der Position des Bereichs und einem oder mehreren Elementen einer grafischen Benutzerschnittstelle (115) eines oder mehrerer Prozesse (120), die auf dem Gerät des Benutzers ausgeführt werden, zu analysieren (202);
auf einen oder mehrere Vertraulichkeitskoeffizienten aus einer Informationsdatenbank (160), die mit einem oder mehreren Elementen verbunden sind, die den Bereich zumindest teilweise überschneiden, zuzugreifen;
eine Wichtigkeitsbewertung des Bereichs auf der Grundlage eines Algorithmus, der den einen oder mehrere Vertraulichkeitskoeffizienten berücksichtigt, zu berechnen;
auf Vertrauensinformationen über den Prozess aus der Informationsdatenbank zuzugreifen;
eine Gefahreneinstufung des Prozesses auf der Grundlage der Vertrauensinformationen über den Prozess zu berechnen;
den Zugriff durch den Prozess (120) auf den Bereich (125) auf der Grundlage eines Vergleichs einer Kombination aus der Gefahreneinstufung des Prozesses und der Wichtigkeitsbewertung des Bereichs mit einem zuvor festgelegten Schwellenwert zu blockieren.

9. Das System nach Anspruch 8, wobei der mindestens eine Prozessor konfiguriert ist, um die Position des Bereichs durch mindestens eine der folgenden Möglichkeiten zu bestimmen:

Bestimmen einer dem Bereich entsprechenden Position auf der Anzeige;
Bestimmen eines Gerätekontextes, der dem Bereich entspricht;
Bestimmen einer dem Bereich entsprechenden Fläche; oder
Bestimmen eines dem Bereich entsprechenden Fenster-Identifikators.

10. Das System nach einem der Ansprüche 8-9, wobei der zumindest eine Prozessor konfiguriert ist, die eine oder mehreren Überschneidungen zwischen der Position des Bereichs und dem einen oder mehreren Elementen der grafischen Benutzerschnittstelle zu analysieren, durch:
Bestimmen, ob das eine oder mehrere Elemente der grafischen Benutzerschnittstelle den Bereich auf der Anzeige enthält, in diesem enthalten ist oder diesen zumindest teilweise überschneidet.

11. Das System nach einem der Ansprüche 8-10, wobei die Gefahreneinstufung eine Berechnung ist, ob die Informationsdatenbank (160) keine Informationen hat, die darauf hinweisen, dass der Prozess (120) vertrauenswürdig ist.

12. Das System nach einem der Ansprüche 8-11, wobei der mindestens eine Prozessor ferner konfiguriert ist, um:

eine oder mehrere Vertraulichkeitskoeffizienten zu berechnen; und
den berechneten einen oder mehrere Vertraulichkeitskoeffizienten in der Informationsdatenbank zu speichern.

13. Das System nach einem der Ansprüche 8-12, wobei der mindestens eine Prozessor so konfiguriert ist, dass er den Zugriff des Prozesses auf den Bereich blockiert, durch:
Ersetzen einer binären Darstellung von Informationen, die auf der Anzeige (110) des Geräts des Benutzers angezeigt werden, in einem Speicher des Computergeräts.

**Revendications**

1. Procédé mis en œuvre par ordinateur pour commander l'accès d'applications sur un dispositif informatique d'un utilisateur, le procédé comprenant :

l'interception (201), par un pilote, de l'accès d'un processus (120) à une zone (125) sur un écran (110) du dispositif de l'utilisateur ;
la détermination, par le pilote, d'une première information du processus, la première information comprenant au moins un identifiant du processus ;
la détermination d'un emplacement de la zone (125) sur l'écran (110) du dispositif de l'utilisateur ;
l'analyse (202) d'une ou plusieurs intersections entre l'emplacement de la zone et un ou plusieurs éléments d'une interface graphique (115) d'un ou plusieurs processus (120) en cours d'exécution sur le dispositif de l'utilisateur ;
l'accès, à partir d'une base de données d'informations (160), à un ou plusieurs coefficients de confidentialité associés à un ou plusieurs éléments qui recoupent au moins partiellement la zone ;

le calcul d'une appréciation d'importance de la zone sur la base d'un algorithme qui prend en compte les un ou plusieurs coefficients de confidentialité ;

l'accès, à partir de la base de données d'informations, à une information de confiance concernant le processus ;

le calcul d'une appréciation de danger du processus sur la base de l'information de confiance concernant le processus ;

le blocage de l'accès du processus (120) à la zone (125) sur la base d'une comparaison d'une combinaison de l'appréciation de danger du processus et de l'appréciation d'importance de la zone avec une valeur seuil établie au préalable.

**2.** Procédé selon la revendication 1, dans lequel la détermination de l'emplacement de la zone comprend au moins l'une parmi :

la détermination d'un emplacement sur l'écran correspondant à la zone ;

la détermination d'un contexte de dispositif qui correspond à la zone ;

la détermination d'une surface correspondant à la zone ; ou

la détermination d'un identifiant de fenêtre correspondant à la zone.

**3.** Procédé selon l'une quelconque des revendications 1 et 2, dans lequel l'analyse des une ou plusieurs intersections entre l'emplacement de la zone et les un ou plusieurs éléments de l'interface graphique comprend :

le fait de déterminer si les un ou plusieurs éléments de l'interface graphique contiennent, sont contenus ou recoupent au moins partiellement la zone sur l'écran.

**4.** Procédé selon l'une quelconque des revendications 1 à 3, dans lequel l'appréciation de danger est un calcul correspondant à la détermination de si la base de données d'informations (160) n'a pas d'informations indiquant que le processus (120) est de confiance.

**5.** Procédé selon l'une quelconque des revendications 1 à 4, comprenant en outre :

le calcul des un ou plusieurs coefficients de confidentialité ; et

le stockage des un ou plusieurs coefficients de confidentialité calculés dans la base de données d'informations.

**6.** Procédé selon l'une quelconque des revendications 1 à 5, dans lequel le blocage de l'accès du processus à la zone comprend :

la substitution, dans une mémoire du dispositif informatique, d'une représentation binaire de l'information en cours d'affichage sur l'écran (110) du dispositif de l'utilisateur.

**7.** Procédé selon l'une quelconque des revendications 1 à 6, comprenant en outre :
le fait de déterminer si une application associée au processus est apte à causer des dommages à un ou plusieurs parmi le dispositif de l'utilisateur et des données sur le dispositif de l'utilisateur sur la base de l'analyse des une ou plusieurs intersections entre l'emplacement de la zone et les un ou plusieurs éléments de l'interface graphique.

**8.** Système pour commander l'accès d'applications sur un dispositif informatique d'un utilisateur, le système comprenant :
au moins un processeur configuré pour :

intercepter l'accès d'un processus (120) à une zone (125) sur un écran (110) du dispositif de l'utilisateur ;

déterminer une première information du processus, la première information comprenant au moins un identifiant du processus :

déterminer un emplacement de la zone (125) sur l'écran (110) du dispositif de l'utilisateur ;

analyser (202) une ou plusieurs intersections entre l'emplacement de la zone et un ou plusieurs éléments d'une interface graphique (115) d'un ou plusieurs processus (120) en cours d'exécution sur le dispositif de l'utilisateur ;

accéder, à partir d'une base de données d'informations (160), à un ou plusieurs coefficients de confidentialité associés à un ou plusieurs éléments qui recoupent au moins partiellement la zone ;

calculer une appréciation d'importance de la zone sur la base d'un algorithme qui prend en compte les un ou plusieurs coefficients de confidentialité ;

accéder, à partir de la base de données d'informations, à une information de confiance concernant le processus ;

calculer une appréciation de danger du processus sur la base de l'information de confiance concernant le processus ;

bloquer l'accès du processus (120) à la zone (125) sur la base d'une comparaison d'une combinaison de l'appréciation de danger du processus et de l'appréciation d'importance de la zone avec une valeur seuil établie au préalable.

**9.** Système selon la revendication 8, dans lequel l'au moins un processeur est configuré pour déterminer l'emplacement de la zone par au moins l'un parmi :

la détermination d'un emplacement sur l'écran correspondant à la zone ;
la détermination d'un contexte de dispositif qui correspond à la zone ;
la détermination d'une surface correspondant à la zone ; ou
la détermination d'un identifiant de fenêtre correspondant à la zone.

**10.** Système selon l'une quelconque des revendications 8 et 9, dans lequel l'au moins un processeur est configuré pour analyser les une ou plusieurs intersections entre l'emplacement de la zone et les un ou plusieurs éléments de l'interface graphique en : déterminant si les un ou plusieurs éléments de l'interface graphique contiennent, sont contenus ou recoupent au moins partiellement la zone sur l'écran.

**11.** Système selon l'une quelconque des revendications 8 à 10, dans lequel l'appréciation de danger est un calcul correspondant au fait de déterminer si la base de données d'informations (160) n'a aucune information indiquant que le procédé (120) est de confiance.

**12.** Système selon l'une quelconque des revendications 8 à 11, dans lequel l'au moins un processeur est en outre configuré pour :

calculer les un ou plusieurs coefficients de confidentialité ; et
stocker les un ou plusieurs coefficients de confidentialité calculés dans la base de données d'information.

**13.** Système selon l'une quelconque des revendications 8 à 12, dans lequel l'au moins un processeur est configuré pour bloquer l'accès du processus à la zone en :
substituant, dans une mémoire du dispositif informatique, une représentation binaire d'une information en cours d'affichage sur l'écran (110) du dispositif de l'utilisateur.

Fig. 1

Intercept access to information
displayed to user — 201

Analysis of intersections — 202

Calculate importance rating of region — 203

Calculate access danger rating — 204

Calculate combination of importance rating of
region and access danger rating — 205

Combination
exceeds threshold
value?

Yes

No

Recognize application as malicious — 206

Application not recognized
as malicious — 207

**Fig. 2**

**Fig. 3**

EP 3 276 522 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7818800 B1

- US 2013346492 A1